# EUROPEAN PATENT APPLICATION

(11) **EP 2 272 804 A2**
(43) Date of publication of application: **12.01.2011**
(21) Application number: 09738929.0
(22) Date of filing: 15.04.2009
(51) Int. Cl.: C02F 3/20

(54) **BIOFILM REACTOR CONTAINING SPIRAL STRUCTURE AND WATER TREATMENT DEVICE USING THE SAME**

(30) Priority: 28.04.2008 KR 20080039610
(71) Applicant: Postech Academy-Industry Foundation, Kyungsangbuk-do 790-784 (KR)
(72) Inventor: HWANG, Seok Hwan, Pohang-si Gyungbuk 790-751 (KR); LIM, Jun Taek, Pohang-si Gyungbuk 790-390 (KR); LEE, Seung Yeop, Pohang-si Gyungbuk 790-390 (KR); CHO, Kyung Jin, Seoul 142-875 (KR)
(74) Representative: Ilgart, Jean-Christophe
(86) International application number: PCT/KR2009/001939
(87) International publication number: WO 2009/134023

(57) **Abstract**

The present invention provides a biofilm reactor comprising a spiral structure and a water treatment facility using the same. The biofilm reactor comprises an inlet pipe for supplying water, an air supply pipe for supplying air, and an outlet pipe for discharging the water and air that passed through the reactor, wherein the reactor is provided therein with a spiral structure for forming a spiral bubble flow passage from the air supply pipe to the outlet pipe such that the oxygen transfer rate is increased by inducing the flow of bubbles supplied from the air supply pipe and by increasing residence time of the bubbles. The biofilm reactor is advantageous in that microbes adhere to the spiral structure to form a biofilm on the spiral structure, thus realizing both microbe suspension growth and microbe adhesion growth conditions, and in that the concentration of dissolved oxygen in water can be effectively increased without using power to stir, and the concentration of microbes can be effectively increased and maintained.

## Description

### [Technical Field]

The present invention relates to a biofilm reactor comprising a spiral structure and a water treatment facility using the same. More particularly, the present invention relates to a biofilm reactor wherein a spiral structure is provided, so that the flow of bubbles in water is guided by the spiral structure, with the result that the residence time of bubbles increases, thereby increasing oxygen transfer efficiency compared to that of conventional reactors used in physical, chemical and biological processes; and wherein microbes adhere to the spiral structure, so that microbes can be concentrated and cultured in one reaction system in a state in which microbe growth environments of suspension growth and adhesion growth have been formed, thereby increasing the efficiency of a biological reaction system.

### [Background Art]

Dissolved oxygen (DO), which is a barometer indicating the concentration of oxygen dissolved in water, is one of the principal operating conditions of physical, chemical and biological processes. Particularly, in biological processes, dissolved oxygen (DO) is an important factor influencing the growth conditions and activity of aerobic microbes [Unit Operation and Unit Process in Environmental Engineering Second Edition Reynolds/Richards], and, even in physical and chemical processes, it is very important to effectively dissolve oxygen in certain related industrial fields. However, since oxygen is a gas with low solubility, it is very difficult to effectively increase the concentration of dissolved oxygen, and thus methods for effectively increasing the concentration of dissolved oxygen in a reactor have attracted considerable attention. Typical examples of the above methods may include a method of increasing aeration efficiency by mounting various types of impellers in a reactor and thus increasing the stirring effect [Bioprocess Engineering Basic Concepts Second Edition Michael L. Shuler/Fikret Kargi], a method of increasing oxygen transfer efficiency by mounting a microbubble generator in a reactor and thus enlarging the surface area of bubbles coming into contact with a unit volume of water [Patent Registration No. 0315903, entitled "Waste water treatment system using microbubble generator"], and a method of increasing dissolved oxygen by using the difference in the oxygen concentration between water and bubbles after increasing the concentration of oxygen in the bubbles [Airlift Bioreactors 1989 M.Y. Chisti]. These methods have practically increased the concentration of dissolved oxygen, satisfying system requirements.

However, all of these methods are problematic in that they increase power consumption. For example, in the case of biological waste water treatment, it is reported in the foreign literature [Investigation of oxygen transfer rates in full scale membrane bioreactors Water Science & Technology 2003, P. Cornel, M. Wagner and S. Krause] that 70% of the total power expenditures of a sewage disposal plant are accounted for by aeration. In fact, power is necessarily required in order to continuously rotate an impeller or make microbubbles, and power is also required in order to produce pure oxygen. Therefore, these methods are difficult to apply to large-sized treatment facilities. Further, another method of increasing the residence time of bubbles by increasing the height of a reactor was proposed, but this method is also problematic in that a large amount of energy is consumed by a diffuser when it spouts out bubbles because the water pressure must be high.

Meanwhile, in biological processes using microbes, it is very important to improve and maintain process efficiency by forming the conditions under which microbes can actively grow and culture in a bioreactor in high concentration. Nitrifying microbes, which have lately played an important role in water treatment, will be explained by way of example. It is known that since nitrifying microbes have a lower growth rate than do other microbes, it is very difficult to maintain a high concentration of the nitrifying microbes in a bioreactor. For this reason, high-concentration microbe culture is being actively researched. When the nitrification system of the water treatment facility cannot be normally operated because of the rapid decrease of nitrifying microbes, nitrogen compounds are discharged to a water system in an amount exceeding the reference value, thus causing environmental pollution. In this case, the companies responsible for causing the environmental pollution must pay a fine. That is, the success or failure of the system is determined by whether or not the concentration of microbes in a bioreactor can be maintained at a predetermined level or more, and thus it is very important to control the concentration of microbes in the bioreactor. This requirement to concentrate and culture microbes is equally applied to other industrial fields using microbes as well as to the water treatment field.

In the water treatment process, the concentration of microbes in a biological treatment system is generally increased by controlling sludge return [Wastewater Engineering Treatment and Reuse Forth Edition, Metcalf & Eddy]. However, there are cases where microbes having low yield and low specific growth rate, such as nitrifying microbes, must be more carefully treated [Nitrification and Denitrification in the Activated Sludge Process Michael H. Gerardi]. For this reason, a method of culturing microbes by attaching them to a carrier was developed and is being used. However, this method is also problematic in that the filling materials that are used must be periodically replaced with new filling materials, so that maintenance expenditures increase, and, when the used filling materials cannot be easily recovered, mechanical defects result.

### [Disclosure]

### [Technical Problem]

An object of the present invention is to provide a method of increasing the concentration of dissolved oxygen in a reactor.

Another object of the present invention is to provide an apparatus for increasing dissolved oxygen in a reactor.

Still another object of the present invention is to provide a method and apparatus for increasing dissolved oxygen without using power.

Still another object of the present invention is to provide a biofilm reactor which can increase dissolved oxygen by increasing the residence time of bubbles.

Still another object of the present invention is to provide a biofilm reactor wherein microbes adhere to a spiral structure to form a biofilm on the surface of the spiral structure and to increase dissolved oxygen, so that microbes are cultured at high concentration, with the result that suspension growth and adhesion growth environments are simultaneously made in a biological reaction system, thereby maintaining the concentration of microbes in the reactor at high level without being dependent on externally-supplied filling materials, and a water treatment facility using the biofilm reactor.

Therefore, it will be expected that the present invention can be easily applied to all kinds of bioreactors using microbes, and that the expenses related to stabilizing a biological reaction system and obtaining microbes can be reduced by culturing microbes at a high concentration.

Still another aspect of the present invention is to provide a spiral structure which can be used to control the concentration of dissolved oxygen.

### [Technical Solution]

In order to accomplish the above objects, an aspect of the present invention provides a biofilm reactor, comprising an inlet pipe for supplying water, an air supply pipe for supplying air, and an outlet pipe for discharging the water and air that passed through the reactor, wherein the reactor is provided therein with a spiral structure for forming a spiral bubble flow passage from the air supply pipe to the outlet pipe such that the oxygen transfer rate is increased by inducing the flow of bubbles supplied from the air supply pipe and by increasing the residence time of the bubbles, and microbes adhere to the spiral structure to form a biofilm to realize microbe growth conditions of both microbe suspension growth and microbe adhesion growth.

In the biofilm reactor, the inlet pipe and the air supply pipe are provided at a lower portion of the reactor, and the outlet pipe is provided at an upper portion of the reactor. Therefore, downward flow or lateral flow as well as upward flow may take place in the biofilm reactor.

In the biofilm reactor, the biofilm reactor may be provided with a pH meter for measuring pH in the reactor in order that the reactor can be stably operated.

In the biofilm reactor, the biofilm reactor may be provided with a dissolved oxygen (DO) meter for monitoring dissolved oxygen in the reactor. There may be a plurality of dissolved oxygen (DO) meters, and, in this case, the plurality of dissolved oxygen (DO) meters may be provided one by one with respect to the water level such that they are disposed at the positions of the reactor divided by the spiral structure.

In the biofilm reactor, the biofilm reactor may be provided with a monitoring sensor for monitoring temperature or ions in order that the reactor can be stably operated.

In the biofilm reactor, the biofilm reactor may be provided with a sampling port for observing the fluid profile of the reactor. There may be a plurality of sampling ports, and, in this case, the plurality of sampling ports may be provided with respect to the water level such that they are disposed one by one at the positions of the reactor divided by the spiral structure.

In the biofilm reactor, the biofilm reactor may be provided with a cover in order to prevent foreign matter from entering into the reactor.

Another aspect of the present invention provides a water treatment facility, comprising: a reactor provided with an inlet pipe for supplying water, an air supply pipe for supplying air, and an outlet pipe for discharging the water and air that passed through the reactor; a spiral structure provided in the reactor and forming a spiral bubble flow passage from the air supply pipe to the outlet pipe such that the oxygen transfer rate is increased by inducing the flow of bubbles supplied from the air supply pipe and by increasing the residence time of bubbles; a sampling port for observing the fluid profile of the reactor; a dissolved oxygen (DO) meter monitoring dissolved oxygen in the reactor; a pH meter measuring hydrogen ion concentration (pH) in the reactor; a computer receiving the dissolved oxygen concentration measured by the DO meter and the hydrogen ion concentration measured by the pH meter and then calculating and controlling the proper aeration amount and pH; a blower connected to the computer and supplying a minimum of air required to obtain an optimal dissolved oxygen concentration; a pH control pump connected to the computer and supplying a suitable amount of acid and alkali from an acid/alkali storage tank into the reactor; and a monitoring sensor monitoring temperature or ions in order that the reactor can be stably operated.

In the water treatment facility, there may be a plurality of dissolved oxygen (DO) meters and a plurality of sampling ports. The plurality of dissolved oxygen (DO) meters and the plurality of sampling ports may be provided with respect to the water level such that they are disposed one by one at the positions of the reactor divided by the spiral structure.

In the water treatment facility, the inlet pipe may be provided with a feed water control pump and a feed water control valve, and the outlet pipe may be provided with a discharged water control pump and a discharged water control valve.

In the water treatment facility, the air supply pipe may be provided with an air control valve such that a constant amount of air is supplied to the reactor.

Still another aspect of the present invention provides a method of controlling the concentration of a dissolved gas, wherein the dissolved gas concentration is controlled by providing a spiral structure forming a spiral bubble flow passage in a reactor.

In the method, the dissolved gas concentration is controlled according to the number of turns of the spiral structure mounted in the reactor, and the dissolved gas may be oxygen which is difficult to dissolve in water.

Still another aspect of the present invention provides a gas dissolving apparatus comprising a reactor provided therein with a spiral structure having a diameter corresponding to that of the reactor.

In still another aspect of the present invention, the spiral structure provided in the biofilm reactor is used as a structure to which microbes can adhere to increase the concentration of dissolved oxygen in the biofilm reactor.

### [Advantageous Effects]

As described above, the biofilm reactor provided therein with a spiral structure according to the present invention is advantageous as follows.

First, in the biofilm reactor, spiral bubble flow is induced by a spiral structure, so that the residence time of bubbles increases, with the result that the contact time between bubbles and water increases, thereby enabling oxygen in the bubbles to more easily dissolve in water. Therefore, the concentration of dissolved oxygen in the biofilm reactor can be effectively increased without consuming power by stirring.

Second, microbes adhere to the spiral structure to form a biofilm on the surface thereof, so that suspension growth and adhesion growth environments are simultaneously formed in a biological reaction system without using a filling material such as a carrier, with the result that microbes can be concentrated and cultured at a high concentration and a large amount of microbes can be obtained, thereby mollifying the effects of toxic materials that have an influence on the microbes. Further, it is expected that it is possible to effectively culture principal functional microbes, such as nitrifying microbes, which are known to have low specific growth and yield and are difficult to grow.

Third, in the biofilm reactor provided with the spiral structure, desired bubble residence time can be realized by controlling the turn angle of the spiral structure. As such, since the bubble residence time suitable for each reactor can be realized, air bubbles having an unnecessarily small diameter may not be formed, thus reducing power expenditure.

Fourth, bubbles ascend and simultaneously collide with the spiral structure to cause friction, so that vortex flow is formed in the biofilm reactor and thus a stirring effect is increased, thereby more effectively increasing the concentration of dissolved oxygen.

Fifth, since the biofilm reactor is connected to a DO meter, a computer and a blower, the concentration of dissolved oxygen in the biofilm reactor detected by the DO meter is transmitted to the computer, and the computer calculates the aeration amount corresponding to the concentration of dissolved oxygen in relation to operating conditions. The blower supplies the bubbles corresponding to the aeration amount calculated by the computer into the biofilm reactor. Due to this sequence of processes, excessive aeration is prevented, thus decreasing power expenditure.

### [Brief Description of Drawing]

FIG. 1 is an overall process view of a water treatment facility according to the present invention;
FIG. 2 is an enlarged view showing a spiral structure according to the present invention;
FIG. 3 is a schematic view showing the behavior of air bubbles when a spiral structure is not provided;
FIG. 4 is a schematic view showing the behavior of air bubbles when a spiral structure is provided;
FIG. 5 is a graph showing the change in bubble residence times according to the number of turns of a spiral structure;
FIG. 6 is a graph showing oxygen transfer coefficients (K_{L}α) in relation to the air flow rate and the number of turns of a spiral structure;
FIG. 7 is a graph showing the increase rate of oxygen transfer coefficient (K_{L}α) compared to a control group in relation to the air flow rate and the number of turns of a spiral structure; and
Fig. 8 is a graph showing the time required to reach the reference dissolved oxygen concentration in relation to the air flow rate and the number of turns of a spiral structure (the reference dissolved oxygen concentration is 8.3 mg/L, which is 90% of the saturated dissolved oxygen concentration (9.22 ∼ 9.3 mg/L) under the experimental conditions).

### <Description of elements in the drawings>

1: reactor
2: spiral structure
3: inlet pipe
4: feed pump
5: outlet pipe
6: drain pump
7: cover
8: sampling port
9: DO meter
10: computer
11: pH meter
12: pH control pump
13: acid/alkali storage tank
14: blower
15: air supply pipe
16: monitoring sensor
17: data storage computer
18: inlet valve
19: outlet valve
20: pH control valve
21: air control valve

### [Best Mode]

Hereinafter, preferred embodiments of the present invention will be described in detail with reference to the attached drawings.

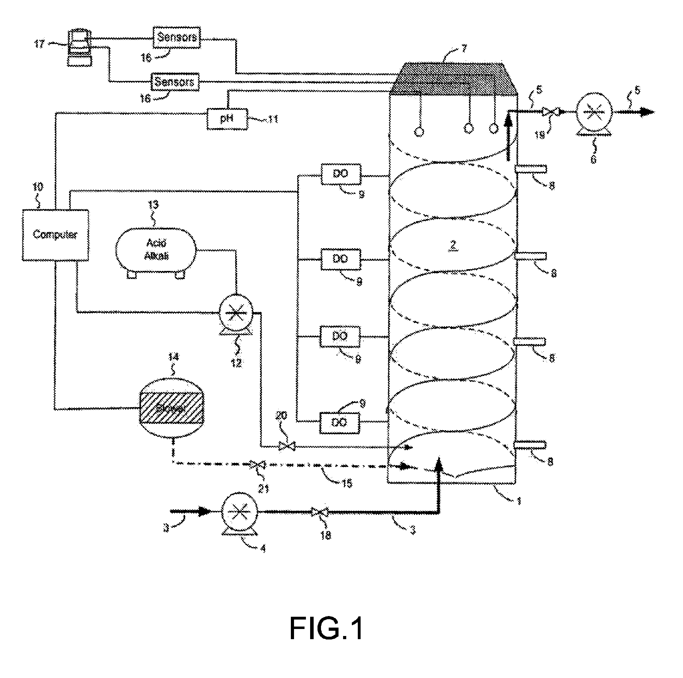

FIG. 1 is an overall process view of a water treatment facility comprising a biofilm reactor according to the present invention. The water treatment facility includes a high-efficiency reactor 1 provided therein with a spiral structure 2 similar to a DNA structure.

The reactor 1 is provided with an inlet pipe 3 for supplying water, an air supply pipe 15 for supplying air, and an outlet pipe 5 for discharging the water and air that passed through the reactor 1.

The reference numerals "3, 4 and 18", which are related to water flowing into the reactor 1, represent an inlet pipe 3, a feed pump 4 and an inlet valve 18, respectively. Water is introduced into the reactor 1 by the feed pump 4, passes through the spiral structure 2 and is then discharged to the outside of the reactor 1. In this case, an outlet pipe 5, an outlet valve 19 and a drain pump 6 are related to the discharge of water.

Air is introduced into the reactor 1 by a blower 14 through an air supply pipe 15. An air control valve 21provided in the air supply pipe 15, together with the blower 14, serves to control the amount of air introduced into the reactor.

The high-efficiency reactor 1 comprising the spiral structure 2 is mounted with a pH meter 11, DO meters 9 and monitoring sensors (for example, temperature sensors, ion sensors, etc.) for the purpose of secure process operation, and is mounted with sampling ports 8 in order to observe the profile of fluid in the reactor 1. The sampling ports 8 are disposed depending on the water level in the reactor 1 in consideration of the fact that the inner side of the reactor 1 is divided by the spiral structure 2.

The reactor 1 is provided with DO meters 9 in order to maximize the dissolved oxygen increment attributable to the spiral structure 2, and the DO meters 9 are connected to a computer 10. The computer 10 is connected to a blower 14 and analyzes the dissolved oxygen concentration measured by the DO meters 9, so that a minimum amount of air, which is required to increase the measured dissolved oxygen concentration to the optimal dissolved oxygen concentration, is introduced into the reactor 1, thereby reducing power expenses. The reactor 1 is also mounted with a pH meter, an acid/alkali storage tank 13, a pH control pump 12 and a pH control valve 20, thus enabling an optimal amount of acid and alkali suitable for maintaining the pH in relation to operating conditions to be introduced into the reactor 1. In this case, various kinds of Ph adjusters (for example, hydrochloric acid (HCl), sulfuric acid (H₂SO₄), nitric acid (HNO₃), sodium hydroxide (NaOH), etc.) may be selectively used according to the characteristics of the process.

While the air introduced into the reactor 1 ascends to the top of the reactor 1 along the spiral structure 2, a part of the air is discharged to the outside of the reaction tank 1 through the outlet pipe 5, and the other part thereof is directly discharged to the atmosphere. In this case, when the reactor 1 is an open-type reactor, air is directly discharged to the atmosphere, but, when the reactor 1 is a close-type reactor, an exhaust port for discharging air must be provided.

In an embodiment of the present invention, a cover 7 is provided on the reactor 1 to prevent foreign matter from entering into the reactor 1. Whether or not the cover 7 is provided on the reactor 1 is determined by the kinds and characteristics of the process. The air introduced into the reactor through the air supply pipe 15 spirally flows by the spiral structure 2, thus increasing residence time. Owing to the increased residence time, the contact time between bubbles and water also increases, and thus oxygen in bubbles more easily dissolves in water. The present inventors conducted experiments in order to determine the increase in residence time of the bubbles. The relevant particulars will be described later with reference to the following Example 1.

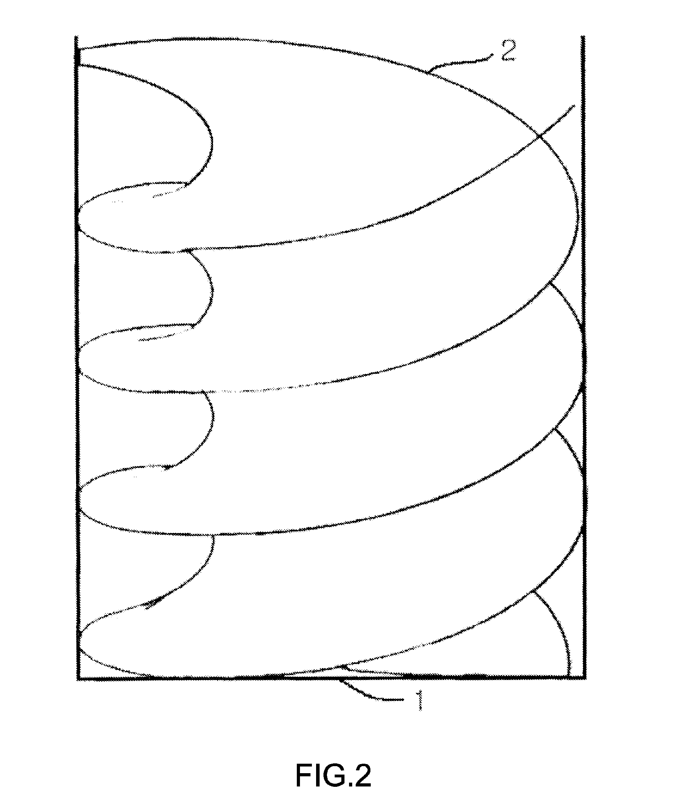

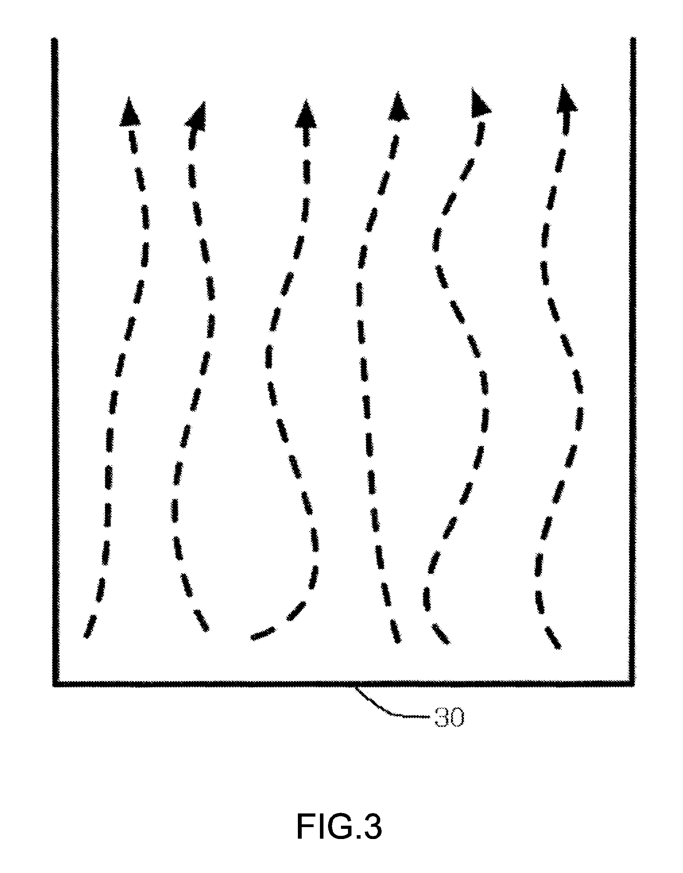

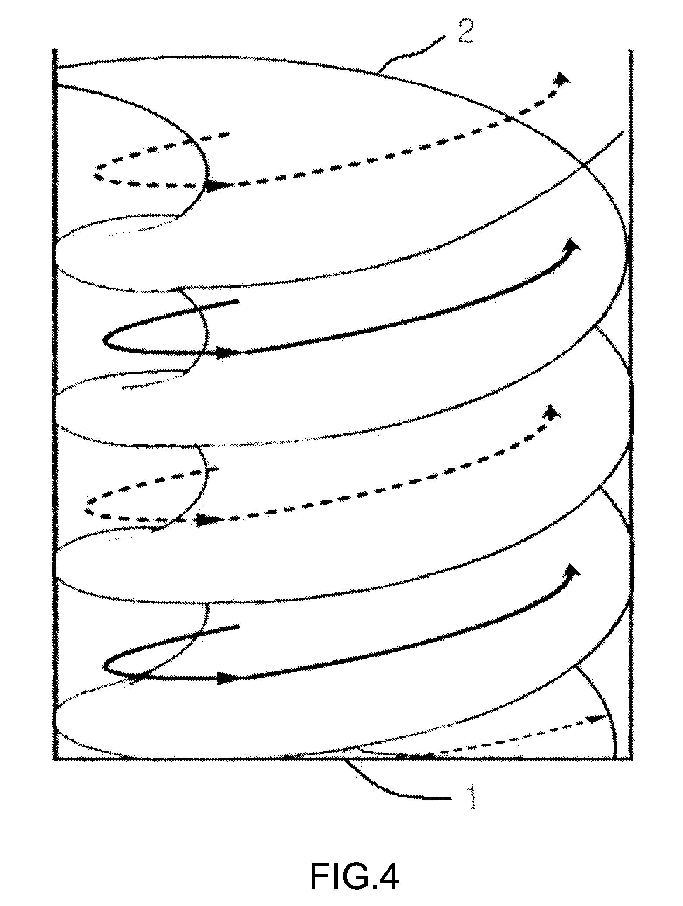

FIG. 2 is an enlarged view showing a spiral structure according to the present invention. The spiral structure 2 applied to the reactor 1 is configured to have the minimal volume inside which bubbles spirally flow and microbes effectively adhere thereto. The present inventors observed the behaviors of bubbles when the spiral structure was provided and when it was not provided, and the results thereof are shown in FIGS. 3 and 4. FIG. 3 is a schematic view showing the behavior of bubbles when a spiral structure is not provided, that is, FIG. 3 shows the behavior of bubbles in the reactor 30 which has not been provided with the spiral structure 2. FIG. 4 is a schematic view showing the behavior of bubbles when a spiral structure is provided. It is shown in FIG. 4 that two independent upward bubble flows are formed by the spiral structure 2 provided in the reactor 1. It can be seen from FIGS. 3 and 4 that the behaviors and moving distances of bubbles in the reactor 1 are remarkably different from each other depending on whether or not the spiral structure 2 is provided.

The spiral structure 2 exhibits several functions in addition to controlling bubble residence time. That is, in the spiral structure 2, the bubbles introduced into the bottom of the reactor 1 spirally flow and ascend, so that friction occurs between the spiral structure and the bubbles, thereby increasing dissolved oxygen and providing stirring effects. Further, in the spiral structure 2, microbes adhere to the spiral structure, so that the suspension growth and adhesion growth conditions of microbes are simultaneously realized, thereby maintaining a high concentration of microbes.

Hereinafter, the theoretical principle for the increase in dissolved oxygen concentration in relation to the increase in bubble residence time will be described in detail.

In a continuous process, the oxygen transfer ability in a specific reactor depends on the mechanical design of the reactor, the geometrical characteristics of a diffuser or an impeller, the operating conditions such as stirring speed, air flow rate and the like. All of the variables can be integrated into only one parameter, and this parameter is the oxygen transfer coefficient (KLα). In other words, the oxygen transfer coefficient (KLα) is an index of the oxygen transfer ability that takes all of the variables into account [Latin American Applied Research P. JUAREZ and J. OREJAS 2001].

The basic formula of oxygen transfer is represented by dC/dt = KLα (Css-C), wherein dC/dt is the oxygen transfer rate, KLα is the oxygen transfer coefficient, Css is the saturated oxygen concentration at the given physical conditions, and C is the concentration of oxygen dissolved in the water. If differently expressed, Css may be oxygen solubility under the physical condition of the corresponding system [Water Research Connie D. DeMoyer 2002]. The above oxygen transfer formula has two independent variables, that is, the oxygen transfer coefficient (KLα) and the saturated oxygen concentration (Css). However, the saturated oxygen concentration (Css) is a parameter that changes in response to physical conditions such as the temperature, pressure, solvent viscosity, concentration of ions dissolved in a solvent and the like, and is not related to bubble residence time. Therefore, the principle of the increase in dissolved oxygen in relation to the increase in bubble residence time attributable to the DNA-shaped spiral structure 2 can be explained by a higher oxygen transfer coefficient (KLα).

In other words, since the value of Css-C is constant for the same physical conditions, the oxygen transfer rate (dC/dt) will increase in proportion to the oxygen transfer coefficient (KLα). Based on this principle, the present inventors found a reason that there is an increase in the oxygen transfer rate attributable to the increase in bubble residence time by measuring the values of the oxygen transfer coefficient while changing the number of turns of the spiral structure and the flow rate of the air. The present inventors obtained dissolved oxygen concentration data with respect to time by decreasing dissolved oxygen concentration to 0 mg/L and then supplying air, and then they measured oxygen transfer coefficients by performing regression analysis using the obtained dissolved oxygen concentration data, and then they compared and analyzed the measured oxygen transfer coefficients with those of a control group (non-turn) in relation to the number of turns of the spiral structure [Bioprocess Engineering Basic Concepts Second Edition Michael L. Shuler/Fikret Kargi]. The relevant particulars will be described later with reference to the following Example 2.

In order to find another reason for the increase in the oxygen transfer rate attributable to the increase in bubble residence time, the present inventors measured the time required to reach a predetermined dissolved oxygen concentration, and then compared the measured times (the number of turns of the spiral structure is 1 and 2) with that of a control group (the number of turns thereof is 0), and the experimental results thereof are described in the following Example 3.

### <Example 1> Experiment for ascertaining the increase of bubble residence time depending on the number of turns of a spiral structure

The present inventors performed experiments for ascertaining the change of bubble residence time depending on the change in number of turns of a spiral structure and whether the spiral structure was provided in a reactor. First, a cylindrical reactor having a diameter of 17 cm was filled with water such that its water head reaches 28. 5 cm, and was provided at the bottom thereof with a diffuser. Here, the number of turns of the spiral structure in the water head of 28.5 cm was set to 1 turn and 2 turns, and the experiments on three sets including a control group were repeatedly conducted five times to measure the average bubble residence time and standard deviation. The bubble residence time is defined as the time it takes bubbles to spout from a diffuser and then reach the water surface.

**[Table 1]**

| Bubble residence time depending on the number of turns of the spiral structure (unit: second) | | | | | | | |
|---|---|---|---|---|---|---|---|
| Number of turns of the spiral structure | Meas. 1 | Meas. 2 | Meas. 3 | Meas. 4 | Meas. 5 | Average | Standard deviation |
| Non-turn (control group) | 1.00 | 1.07 | 1.02 | 1.01 | 1.02 | 1.024 | 0.0270Ð |
| 1 turn | 1.17 | 1.15 | 1.23 | 1.17 | 1.09 | 1.162 | 0.0502Ð |
| 2 turns | 1.52 | 1.7 | 1.72 | 1.48 | 1.75 | 1.634 | 0.1244Ð |

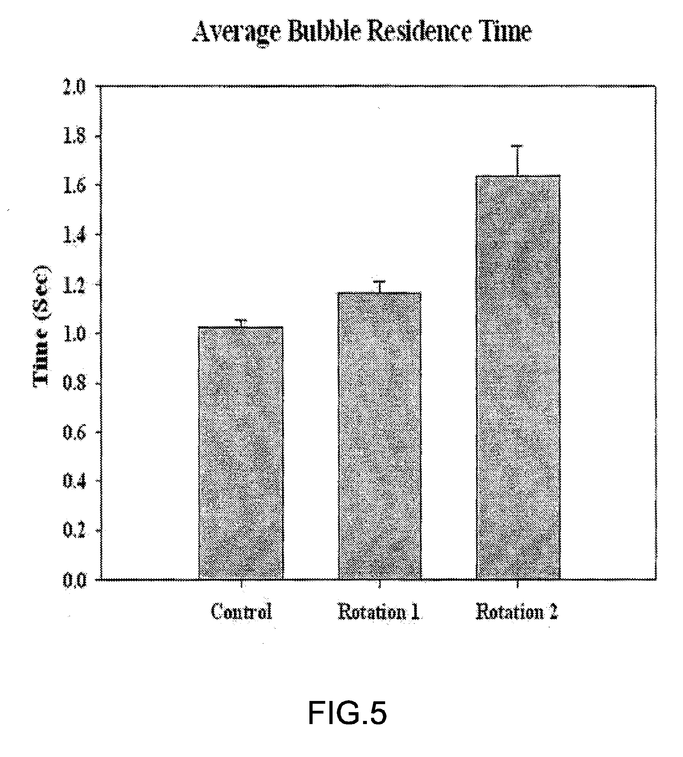

It can be seen from Table 1 that the bubble residence time in 1 turn was increased to about 12% that of the control group, and that the bubble residence time in 2 turns was increased to about 60% that of the control group. These data are meaningful because the effect of the increase in bubble residence time attributable to the provision of a spiral structure is numerical and quantitative instead of being an intuitive estimation. Further, it is clearly ascertained from Example 1 that the bubble residence time increases as the number of turns of a spiral structure increases. The related supplementary data are shown in FIG. 5.

Since the scale (diameter, height or volume) of a reactor becomes large in a real-scale process, the bubble moving distance in the actual process become long compared to that in a lab-scale process. For this reason, it will be expected in the real-scale process that the increase in bubble residence time in the real-scale process can be accomplished relatively rapidly compared to that in the lab-scale process. Further, the reactor including a high-frequency DNA-shaped spiral structure according to the present invention is advantageous because the desired bubble residence time can be realized by controlling the bottom area, height and the like of the reactor itself. Further, the reactor is advantageous in that the bubble residence time and dissolved oxygen concentration in the reactor can be controlled by adjusting the angle of turn of the spiral structure for a given reactor size.

### <Example 2> Oxygen transfer coefficient (KLα) depending on the air flow rate and the number of turns of a spiral structure [Bioprocess Engineering Basic Concepts Second Edition Michael L. Shuler/Fikret Kargi]

The reason for selecting the oxygen transfer coefficient as one of the factors for evaluating the increase of dissolved oxygen concentration attributable to the spiral structure was mentioned before. The present inventors ascertained the effect of the reactor of the present invention on the increased in oxygen transfer efficiency by measuring oxygen transfer coefficients in relation to the number of turns of the spiral structure and whether or not the spiral structure is provided in the reactor and then comparing the measured oxygen transfer coefficients with respect to each set of experiments.

First, a cylindrical reactor was filled with 6L of water and then provided therein with a spiral structure, and then nitrogen gas was charged in the reactor until the dissolved oxygen concentration reached 0 mg/L. Thereafter, air was supplied to the reactor at a constant flow rate for each experiment set, and simultaneously the dissolved oxygen concentration in the reactor was recorded every 10 seconds. The dissolved oxygen concentrations of all of the experiment sets were measured at the same position. Subsequently, the present inventors conducted regression analysis with the experimental data "dissolved oxygen concentration - time" obtained in this way to obtain oxygen transfer coefficients. Here, the number of turns of the spiral structure was set to non-turn, 1 turn and 2 turns, and the air flow rate was set to 1 L/min, 2 L/min, 3 L/min, 4 L/min and 5 L/min, and, in this condition, the experiments were repeatedly conducted to obtain oxygen transfer coefficient for each experiment set. The following Table 2 shows oxygen transfer coefficients in relation to the number of turns of the spiral structure and the changes in the air flow rate.

**[Table 2]**

| | | | | | |
|---|---|---|---|---|---|
| Oxygen transfer coefficients (KLα) depending on air flow rate and number of turns (Unit: hr-1) | | | | | |

| Air flow rate Ð | Control group A | 1 turn B | 2 turns C | Increase rate (%) (B-A)/Ax100 | Increase rate R2(%) (C-A)/Ax100 |
|---|---|---|---|---|---|
| 1 L/min | 9.40 | 11.11 Ð | 12.08 Ð | 18.2 Ð | 28.5 |
| 2 L/min | 17.44 Ð | 18.77 Ð | 20.96 | 7.7 | 20.2 |
| 3 L/min | 21.99 | 23.21 | 25.22 | 5.5 | 14.7 |
| 4 L/min | 25.39 | 25.66 Ð | 26.71 Ð | 1.1 | 5.2 |
| 5 L/min | 29.75 Ð | 30.70 Ð | 31.69 Ð | 3.2 | 6.5 |

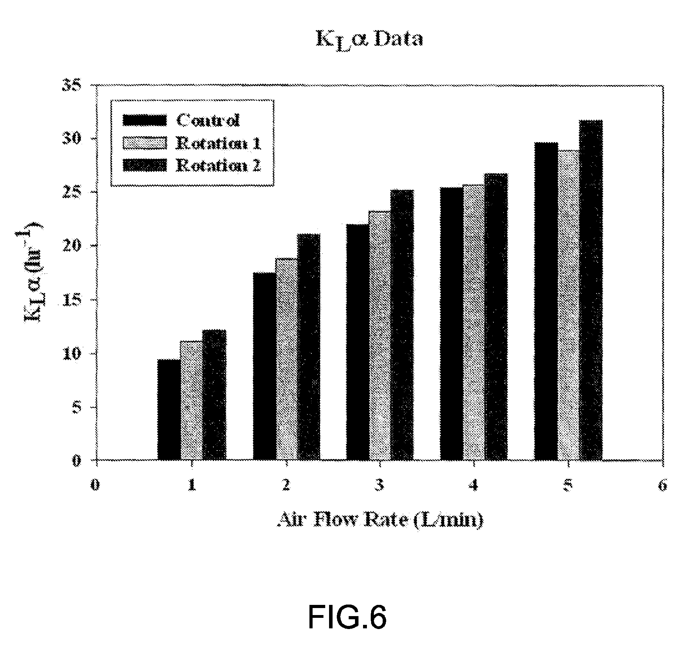

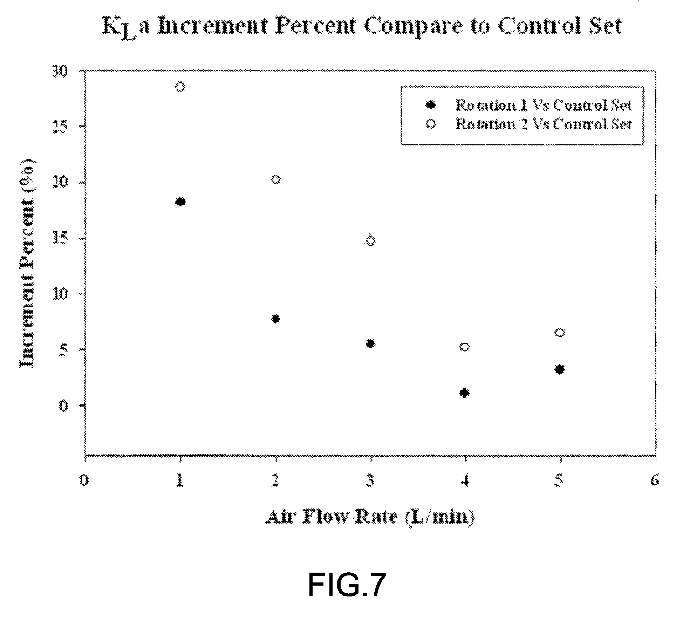

FIG. 6 is a bar graph showing oxygen transfer coefficients depending on air flow rate and number of turns. Since the purpose of this experiment was to ascertain the influence of the spiral structure on the oxygen transfer coefficient, the present inventors determined that it was proper to compare oxygen transfer coefficients under the conditions of the same air flow rate and different number of turns. As a result, they inferred that the rate of increase in the oxygen transfer coefficient in relation to the number of turns of a spiral structure. FIG. 7 is a graph showing the rate of increase in the oxygen transfer coefficient in the spiral structure compared to that of the control group.

It can be seen from the results of Example 2 that the oxygen transfer efficient increases as the number of turns of a spiral structure increases. Further, it can be seen that the rate of increase in the oxygen transfer coefficient is relatively high at low aeration conditions, and, particularly, that the oxygen transfer coefficient in 2 turns at a flow rate of 1 L/min is increased to about 30% of that of a control group. These results provide very persuasive grounds for explaining the increase of dissolved oxygen concentration per aeration, which is one of the principal purposes of the present invention.

### <Example 3> Time required to reach reference dissolved oxygen concentration

### *(reference dissolved oxygen concentration (8.3 mg/L) - 90% of the saturated dissolved oxygen concentration under the experimental conditions)

In order to verify the excellence of the reactor, the present inventors determined the reference dissolved oxygen concentration under the same experimental conditions as in Example 2, measured the time required to reach the reference dissolved oxygen concentration, and then compared them. Here, the reference dissolved oxygen concentration was set to 8.3 mg/L which is 90% of the saturated dissolved oxygen concentration (9.22 - 9.32 mg/L) at a temperature of 20.3 - 20.9°C and a pressure of 1 atm. The compensation of the saturated dissolved oxygen concentration is disclosed in the document "Temperature and pressure dependent solubility of oxygen in water: a thermodynamic analysis, Hydrometallurgy, Desmond Tromans 1998".

**[Table 3]**

| | | | | | |
|---|---|---|---|---|---|
| Time required to reach the reference dissolved oxygen concentration (8.3 mg/L) depending on the number of turns of a spiral structure (unit: second) | | | | | |

| Air flow rate | Control group A | 1 turn B | 2 turns C | Shortened time (turn 1) A-B | Shortened time (turn 2) A-C |
|---|---|---|---|---|---|
| 1 L/min | 860 | 830 | 790 | 30 | 70 Ð |
| 2 L/min | 510 | 490 | 440 | 20 | 70 Ð |
| 3 L/min | 420 | 380 | 370 | 40 | 50 Ð |
| 4 L/min | 360 | 350 | 340 | 10 | 20 Ð |
| 5 L/min | 290 | 300 | 290 | -10 | 0 Ð |

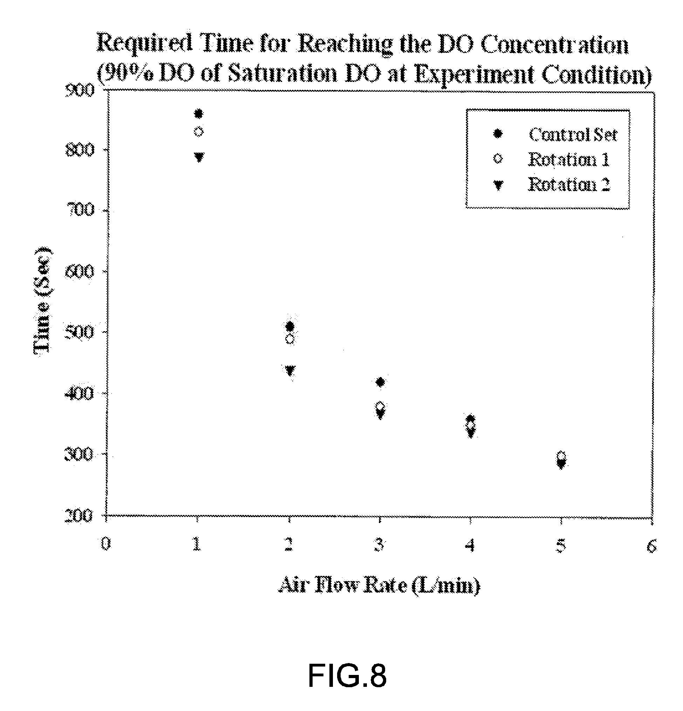

It can be seen from the results of the experiment of Example 2 that time required to reach the reference dissolved oxygen concentration becomes shorter as the amount of aeration decreases or as the number of turns of a spiral structure increases. For example, in the case of a control group (non-turn) at an air flow rate of 1 L/min, 860 seconds were taken to reach 8.3 mg/L, whereas, in the case of 1 turn of a spiral structure, 830 seconds were taken to reach 8.3 mg/L, that is, it was shortened by 30 seconds, and, in the case of 2 turns of the spiral structure, it was reduced by 70 seconds. The data of Example 3 supports the fact that the bubble residence time is increased by the DNA-shaped spiral structure, so that the time required to reach a predetermined dissolved oxygen concentration is shorter, with the result that the oxygen transfer coefficient increases, thereby increasing the actual dissolved oxygen concentration. Further, the data of Example 3, the same as in Example 2, supports the fact that the dissolved oxygen concentration clearly increases under low aeration conditions, thus increasing the concentration of dissolved oxygen per unit aeration. FIG. 8, related to Example 3, shows the time required to reach the reference dissolved oxygen concentration for each experiment set.

## Claims

1. A method of controlling a dissolved gas concentration, wherein the dissolved gas concentration is controlled by providing a spiral structure forming a spiral bubble flow passage in a reactor.

2. The method according to claim 1, wherein the dissolved gas is dissolved oxygen.

3. The method according to claim 1 or 2, wherein the dissolved gas concentration is proportional to the number of turns of the spiral structure.

4. An apparatus for controlling a dissolved gas concentration, comprising a reactor provided therein with a spiral structure.

5. An aerator, comprising a reactor provided therein with a spiral structure forming a bubble flow passage.

6. The aerator according to claim 5, wherein the spiral structure has a diameter corresponding to that of the aerator.

7. The aerator according to claim 5 or 6, wherein the spiral structure is a non-powered structure.

8. A biofilm reactor, comprising a reactor provided therein with a spiral structure forming a spiral bubble flow passage.

9. The biofilm reactor according to claim 8, comprising an inlet pipe for supplying water, an air supply pipe for supplying air, and an outlet pipe for discharging the water and air that passed through the reactor,
wherein the reactor is provided therein with a spiral structure for forming a spiral bubble flow passage from the air supply pipe to the outlet pipe such that an oxygen transfer rate is increased by inducing a flow of bubbles supplied from the air supply pipe and by increasing residence time of the bubbles, and microbes adhere to the spiral structure to form a biofilm to realize microbe growth conditions of both microbe suspension growth and microbe adhesion growth.

10. The biofilm reactor according to claim 8 or 9, wherein the inlet pipe and the air supply pipe are provided at a lower portion of the reactor, and the outlet pipe is provided at an upper portion of the reactor, and thus upward flow is formed.

11. The biofilm reactor according to claim 8 or 9, wherein the reactor is provided with a pH meter for measuring pH in the reactor in order that the reactor is stably operated.

12. The biofilm reactor according to claim 8 or 9, wherein the reactor is provided with a cover in order to prevent foreign matter from entering into the reactor.

13. The biofilm reactor according to claim 8 or 9, wherein the reactor uses nitrifying microbes.

14. A water treatment facility, comprising:
a reactor provided with an inlet pipe for supplying water, an air supply pipe for supplying air, and an outlet pipe for discharging the water and air that passed through the reactor;
a spiral structure provided in the reactor and forming a spiral bubble flow passage from the air supply pipe to the outlet pipe such that oxygen transfer rate is increased by inducing the flow of bubbles supplied from the air supply pipe and by increasing residence time of the bubbles;
a sampling port for observing a fluid profile in the reactor;
a dissolved oxygen (DO) meter for monitoring dissolved oxygen in the reactor;
a pH meter for measuring hydrogen ion concentration (pH) in the reactor;
a computer for receiving the dissolved oxygen concentration measured by the DO meter and the hydrogen ion concentration measured by the pH meter and then calculating and controlling a proper aeration amount and pH;
a blower connected to the computer and supplying a minimum of air required to obtain an optimal dissolved oxygen concentration;
a pH control pump connected to the computer and supplying a suitable amount of acid and alkali from an acid/alkali storage tank into the reactor; and
a monitoring sensor monitoring temperature or ions in order to stably operate the reactor.
